# EUROPÄISCHE PATENTSCHRIFT

(11) **EP 2 659 287 B1**
(45) Veröffentlichungstag und Bekanntmachung des Hinweises auf die Patenterteilung: **06.08.2014**
(21) Anmeldenummer: 12723123.1
(22) Anmeldetag: 26.04.2012
(51) Int. Cl.: G01S 5/16

(54) **SYSTEM ZUR AUSWERTUNG VON IDENTIFIKATIONSMARKEN UND DEREN VERWENDUNG**
SYSTEM FOR EVALUATING IDENTIFICATION MARKS AND USE THEREOF
SYSTÈME D'ÉVALUATION DE MARQUES D'IDENTIFICATION ET UTILISATION DESDITES MARQUES D'IDENTIFICATION

(30) Priorität: 07.05.2011 DE 102011050201
(43) Veröffentlichungstag der Anmeldung: 06.11.2013
(73) Patentinhaber: Hieronimi, Benedikt, 86830 Schwabmünchen (DE); Hieronimi, Vincent, 86830 Schwabmünchen (DE)
(72) Erfinder: HIERONIMI, Christian, 86830 Schwabmünchen (DE)
(74) Vertreter: Fleuchaus, Michael A.
(86) Internationale Anmeldenummer: PCT/EP2012/057630
(87) Internationale Veröffentlichungsnummer: WO 2012/152592

(56) Entgegenhaltungen:
- EP-A2- 0 813 073
- WO-A1-2005/076033
- WO-A1-2006/115958
- WO-A2-03/044734
- WO-A2-2006/030444
- US-A1- 2011 024 500

## Beschreibung

Die Vorliegende Erfindung betrifft die Technologie der Erfassung und Auswertung von Identifikationsmarken. Insbesondere betrifft die vorliegende Erfindung ein System zur Erfassung der Position sowie der Identität von Identifikationsmarken, entsprechende Identifikationsmarken sowie Verwendungen des Systems und der Identifikationsmarken.

Identifikationsmarken sind im Stand der Technik unter Anderem in Form von optischen Markern bzw. Tags bekannt. Derartige Marker bzw. Tags finden bereits zahlreich Anwendung, sowohl in der Fertigung, beispielsweise zur Verfolgung von Teilen und/oder auch der Maschinensteuerung.

überwiegend werden optische Tags, beispielsweise in Form von Barcode-Tags, zur Identifikation von Waren verwendet an denen sie angebracht sind. Dies erfolgt in der Regel durch das Ablesen des Tags wobei die gelesene Information aufgrund einer zuvor in einem externen System gespeicherten Zuordnung eine ein-eindeutige Relation des Tags mit der Ware bzw. umgekehrt erlaubt.

Bei diesen bekannten Systemen hat sich gezeigt, dass insbesondere bei dem Vorhandensein einer Mehrzahl von Tags innerhalb eines Raums allein das Lesen der Information der Tags (nach folgend auch Kennung der Tags) mitunter nicht ausreichend ist. Vielmehr werden auch Informationen über die Lokalisierungen der Tags innerhalb des Raums gewünscht und insbesondere eine konkrete Zuordnung der räumlichen Lokalisierung eines Tags mit der von ihm getragenen Information (Kennung).

Die WO 2006/030444 A2, die zur Abgrenzung in der zweiteiligen Form dient, und die WO 03/044734 A2 offenbaren jeweils Systeme zum Nachverfolgen eines Objektes, insbesondere von Markern innerhalb eines geschlossenen Raums mit mehreren optische Aufzeichnungseinrichtungen. Die EP 0 813 073 A2 offenbart ein System zum Erfassen der Position einer Mehrzahl von infrarot Markern.

Es ist daher eine Aufgabe der Erfindung, eine System zur Erfassung und Auswertung von Identifikationsmarken zur Verfügung zu stellen, welches bekannte Systeme zumindest teilweise verbessert und insbesondere zusätzlich zur Position einer Identifikationsmarke auch deren Kennung erfasst werden kann. Es ist eine weitere Aufgabe der Erfindung geeignete Tags für derartige Systeme zur Verfügung zu stellen.

Diese und weitere Aufgaben werden durch ein System zur Erfassung der Kennung und Position wenigstens einer Identifikationsmarke mit den Merkmalen des Anspruch 1 gelöst. Bevorzugte Verwendungen des erfindungsgemäßen Systems sind Gegenstand des Anspruch 19. Identifikationsmarken gemäß der Erfindung sind Gegenstand des Anspruchs 21. Bevorzugte Ausführungsformen sind Gegenstand der jeweiligen abhängigen Ansprüche.

Danach weist ein System zur Erfassung der Kennung und Position wenigstens einer Identifikationsmarke wenigstens eine erste optische Aufzeichnungsvorrichtung auf, welche so eingerichtet ist, dass mittels dieser ersten optischen Aufzeichnungsvorrichtung die räumliche Position wenigstens einer Identifikationsmarke die innerhalb des Messvolumens der ersten optischen Aufzeichnungsvorrichtung angeordnet ist erfasst werden kann und wenigstens eine Datenverarbeitungseinrichtung, welche mit der ersten optischen Aufzeichnungsvorrichtung zumindest indirekt verbunden ist und von dieser Informationen über die räumliche Position der erfassten Identifikationsmarke übermittelt erhält.

Erfindungsgemäß weist das System zudem wenigstens eine zweite optische Aufzeichnungsvorrichtung auf, welche so eingerichtet ist, dass mittels dieser zweiten optischen Aufzeichnungsvorrichtung eine plan-Projektion zumindest eines Teils des Messvolumens der ersten optischen Aufzeichnungsvorrichtung ortsaufgelöst abgetastet werden kann, wobei die wenigstens eine Datenverarbeitungseinrichtung mit der zweiten optischen Aufzeichnungsvorrichtung zumindest indirekt verbunden ist und von dieser ortsaufgelöste Informationen über die abgetastete Projektion übermittelt erhält. Der wenigstens einen Datenverarbeitungseinrichtung stehen Transformationsinformationen zur Verfügung, welche die Definition einer region of interest (ROI) in den ortsaufgelösten Informationen über die abgetastete Projektion ermöglichen, und wobei die ROI auf das Vorhandensein und die Art von Kennungsinformationen hin untersucht werden, um hieraus die Kennung der erfassten Identifikationsmarke zu ermitteln.

Bevorzugt handelt es sich bei den ortsaufgelösten Informationen über die abgetastete Projektion um digitale Bildinformationen. Innerhalb dieser Informationen wir bevorzugt wenigstens ein Bereich definiert, also eine ROI, welcher dann mittels geeigneter digitaler Bildverarbeitungsoperationen, wie Filterung, Kontrastverstärkung, Differenz-, Summen- und/oder Quotientenbildung, Farbraumverschiebungen, Farbanalysen, Mustererkennung, und dergleichen weiter beund/oder verarbeitet wird. Aus dieser Be- bzw. Verarbeitung ergibt sich dann, ob innerhalb der ROI Kennungsinformationen vorliegen und, sofern dies der Fall ist, um welche Kennung es sich handelt.

Räumlich abtastende optische Aufzeichnungsvorrichtungen sind auf Grund ihres Anwendungsfelds üblicherweise ausgelegt die räumliche Position von Identifikationsmarken, welche häufig retroreflektierende Elemente aufweisen, mit hoher Genauigkeit zu erfassen. Weitere Merkmale von Identifikationsmarken, beispielsweise die Form oder Farbe von Identifikationsmerkmalen, der Identifikationsmarken können jedoch aufgrund der Auslegung dieser Systeme häufig nur sehr schlecht, also mit hoher Unsicherheit, oder aber garnicht erfasst werden.

Das erfindungsgemäße System schafft hier insoweit Abhilfe als durch die zweite optische Aufzeichnungsvorrichtung ein zum Zwecke der Erfassung der Identifikationsmerkmale der Identifikationsmarken optimiertes optisches System bereit gestellt wird, wobei erfindungsgemäß die von der ersten optischen Aufzeichnungsvorrichtung ermittelten Informationen, also Daten über Positionen von Identifikationsmarken, zur Verbesserung der Erkennungsgenauigkeit und Erkennungssicherheit der zweiten optischen Aufzeichnungsvorrichtung, welche die Kennung der Identifikationsmarken ermittelt, herangezogen wird.

Bei einer Ausführungsform der Erfindung ist die wenigstens eine erste optische Aufzeichnungsvorrichtung eine im infraroten Spektralbereich arbeitende, stereoskopische Kamera und die wenigstens eine zweite optische Aufzeichnungsvorrichtung eine im sichtbaren Spektralbereich arbeitende CCD- oder CMOS-Kamera, welche bevorzugt eine besonders hohe Auflösung aufweist.

Erfindungsgemäß erfolgt dies dadurch, dass durch die von der ersten Aufzeichnungsvorrichtung erhaltenen Positionsinformationen durch Anwendung einer Transformation auf der Grundlage der Transformationsinformationen zu einer Ortsbestimmung führt, an welcher Position bzw. an welchem Ort innerhalb der ortsaufgelösten Informationen über die abgetastete plan-Projektion, welche durch die zweite optische Aufzeichnungsvorrichtung aufgezeichnet wird, die Kennungsinformationen dieser Identifikationsmarke vorhanden sind. Im Bereich dieses Ortes wird sodann eine region of interest (ROI) definiert und die ROI auf das Vorhandensein und die Art von Kennungsinformationen hin analysiert, um hieraus die Kennung der erfassten Identifikationsmarke zu ermitteln.

Im Zuge der Verarbeitung der ortsaufgelösten Informationen über die abgetastete plan-Projektion, welche durch die zweite optische Aufzeichnungsvorrichtung aufgezeichnet wird, erfolgt bevorzugt also vor der Bildanalyse, beispielsweise durch digitale Bildbearbeitungsoperationen, eine Beschränkung des Bildfeldes, innerhalb dessen eine solche Bildanalyse überhaupt durchgeführt wird. Durch diese Art der "Beschränkung" der Analyse auf die ROI innerhalb der ortsaufgelösten Informationen über die abgetastete plan-Projektion, also bevorzugt der digitale Bildinformationen, erfolgt eine erhebliche Reduktion des Rechenaufwandes bei der digitalen Verarbeitung dieser Informationen und gleichzeitig eine deutliche Erhöhung der Erfassungsgenauigkeit und/oder -empflindlichkeit sowie insbesondere der Erfassungsgeschwindigkeit.

Beim erfindungsgemäßen System ist zudem in einer mit der wenigstens einen Datenverarbeitungseinrichtung verbundenen ersten Speichereinrichtung eine Datenstruktur vorgesehen, die zumindest teilweise eine virtuelle Repräsentation des durch das Messvolumen der ersten optischen Aufzeichnungsvorrichtung aufgespannten Raums beinhaltet, wobei die virtuelle Repräsentation Informationen über die Soll-Position wenigstens einer Identifikationsmarke sowie wenigstens eine zugeordnete Kennung umfasst, und die wenigstens eine Datenverarbeitungseinrichtung nimmt einen Vergleich zwischen der Ist-Position einer Identifikationsmarke und der Soll-Position einer Identifikationsmarke innerhalb der virtuellen Repräsentation vor sowie einen Vergleich der ermittelten Kennung der erfassten Identifikationsmarke und der innerhalb der Datenstruktur gespeicherten Kennung der entsprechenden Identifikationsmarke. Als Ergebnis der Vergleiche wird von der Datenverarbeitungseinrichtung dann ein "Übereinstimmung" bzw. "keine Übereinstimmung" repräsentierendes Signal ausgegeben, was das jeweilige Vergleichsergebnis repräsentiert.

Ein so ausgestaltetes erfindungsgemäßes System hat den Vorteil, dass es nicht lediglich die räumliche Position einer Identifikationsmarke, vorzugsweise bezüglich der ersten optischen Aufzeichnungsvorrichtung ermitteln kann, sondern es bietet darüber hinaus insbesondere die Möglichkeit, in einer virtuellen Repräsentation des vom Messvolumen der ersten optischen Aufzeichnungsvorrichtung aufgespannten Raums die Position wenigstens einer Identifikationsmarke absolut zu bestimmen (Ist-Position) und in Bezug zu einer mit der virtuellen Repräsentation gespeicherten Position (Soll-Position) der entsprechenden Identifikationsmarke zu setzen.

Die Soll-Position innerhalb der virtuellen Repräsentation wurde dabei vorzugsweise entweder durch eine oder mehrere unmittelbar in der virtuellen Repräsentation vorgenommene Definitionen solcher Positionen nebst Kennungen festgelegt, oder aber durch die Vermessung wenigstens eines Vorgabeobjektes, welche entsprechende Identifkationsmarken an vorgegebenen Stellen und/oder in vorgegebenen Mustern angebracht hat, und die Aufzeichnung der so ermittelten Positionen sowie Kennungen der Identifikationsmarken und deren Registrierung als Soll-Positionen in der virtuellen Repräsentation.

Die virtuelle Repräsentation stellt somit bevorzugt eine virtuelle Darstellung zumindest eines Teiles des von der ersten optischen Aufzeichnungsvorrichtung vermessenen Volumens dar in welche hinein sämtliche erfassten Positions- und/oder Kennungsinformationen hineintransponiert werden und in welcher eine Weiterverarbeitung der gewonnenen Daten auf einfache Weise erfolgen kann.

Besonders bevorzugt sind die Transformationsinformationen so eingerichtet, dass aufgrund der Anwendung der Transformationsinformationen auf die Informationen über die räumliche Position einer Identifikationsmarke, wie diese von der ersten optischen Aufzeichnungsvorrichtung ermittelt wird, eine Lokalisierung derselben Identifikationsmarke in der plan-Projektion erfolgt, wobei auf der Grundlage dieser Lokalisierung die Definition der ROI in den ortsaufgelösten Informationen über die abgetastete Projektion erfolgt.

Durch die Transformationsinformationen erfolgt quasi eine Abbildung zumindest eines Teils des Messvolumens auf die plan-Projektion desselben, allerdings vorzugsweise in der Domäne der zweiten optischen Aufzeichnungsvorrichtung, also quasi aus Sicht dieser. Geeignete Transformationsinformationen haben beispielsweise die Form einer Matrix, gegebenenfalls einer komplexwertigen Matrix mit der gegebenenfalls eine symbolische Transformation der ermittelten Positionsinformationen erfolgen könnte, oder aber eines gegebenenfalls mehrdimensionalen numerischen Zahlenfeldes, das dann für eine numerische Transformation - erforderlichenfalls umfassend Inter- oder Extrapolationen - herangezogen werden kann.

Als Beispiel einer Matrixtransformation sei hier lediglich die Multiplikation eines Raumvektors mit einer geeigneten Matrix der Dimension m x n genannt, woraus sich dann ein Ebenenvektor ergibt, dessen Werte die Lokalisierung derselben Identifikationsmarke in der plan-Projektion anzeigen.

Bei einer Ausführungsform der Erfindung, die gesondert und/oder ergänzend anwendbar ist besteht eine Möglichkeit Transformationsinformationen zu ermitteln und/oder zu kalibrieren und möglicherweise auch zu verifizieren in der Bestimmung der Position wenigstens einer Identifikationsmarke durch die erste optische Aufzeichnungsvorrichtung bzw. deren Kennung durch die zweite optische Aufzeichnungsvorrichtung und das In-Bezugsetzen der Positionsinformation mit der Information über die Lokalisierung der Kennung innerhalb der plan-Projektion. Zur Vereinfachung dieses Vorgangs kann hierbei die ROI für die Verarbeitung durch die wenigstens eine Datenverarbeitungsvorrichtung durch den Benutzer, welcher die Erstellung, Kalibrierung oder Verifikation der Transformationsinformationen vornimmt manuell oder semiautomatisiert bestimmt werden.

Zu Kalibrierungszwecken kann hierfür auch eine ortsfeste Identifikationsmarke verwendet werden, wobei in der virtuellen Repräsentation die Position und die Kennung dieser Identifikationsmarke vorzugsweise bei der Herstellung oder Einrichtung des Systems bereits definiert und ggf. als unveränderlich gekennzeichnet wird.

Auf diese Weise ist auch eine kontinuierliche Rekalibrierung möglich bzw. zumindest eine ständige Kontrolle, dass die Erst- oder eine Folgekalibrierung noch zuverlässig richtig ist, da jegliche Abweichung der ermittelten Informationen über die Position ortsfester Informationsmarken von der damit verbundenen Lokalisierung der Kennungsinformationen innerhalb der plan-Projektion zu einer entsprechenden Fehlermeldung führen kann. Hierfür ist es von Vorteil, die Lokalisierungsinformationen der jeweiligen Kennungsinformationen der Identifikationsmarke(n) ebenfalls, gegebenenfalls als unveränderlich markiert, in der Datenstruktur der virtuellen Repräsentation mit zu speichern.

Bei einer besonders bevorzugten Ausführungsform ist die wenigstens eine Datenverarbeitungseinrichtung mobil, und insbesondere eine tragbare Datenverarbeitungseinrichtung, vorzugsweise ein tragbarer Computer (Laptop), ein Tablettcomputer, ein Smart-Device oder dergleichen. Dies erlaubt ein einfaches Arbeiten mit dem erfindungsgemäßen System, insbesondere in Anwendungen, in denen, ein Nachpositionieren einer Identifikationsmarke erfolgt oder erfolgen kann, bis die Datenverarbeitungseinrichtung als Ergebnis des Vergleichs zwischen Ist-Position und Soll-Position eine "Übereinstimmung" ausgibt.

Bei einer besonders bevorzugten Ausführungsform der vorliegenden Erfindung besteht die erste Datenverarbeitungseinrichtung aus einer Mehrzahl zusammenwirkender Datenverarbeitungseinrichtungen, wobei eine Datenkommunikation zwischen den mehreren Datenverarbeitungseinrichtungen vorzugsweise mittels optischer, Funk oder elektrischer Datenverbindungen erfolgt. Insbesondere kann hierbei ein Zusammenwirken einer stationären Datenverarbeitungseinrichtung mit einer mobilen Datenverarbeitungseinrichtung von Vorteil sein, besonders dann, wenn im Rahmen der Datenverarbeitung große Datenmengen zu verarbeiten oder zu speichern sind und daher durch die begrenzten Kapazitäten einer tragbaren Datenverarbeitungseinrichtung hinsichtlich Rechenleistung und/oder Speichervermögen eine Leistungseinbusse bei der Verarbeitung zu befürchten wäre. Die mobile Datenverarbeitungseinrichtung könnte in diesem Fall zumindest teilweise eine Art Ein-/Ausgabeeinheit für die stationäre Datenverarbeitungseinrichtung sein.

Überdies kann natürlich ein kooperatives zusammenwirken mehrerer Datenverarbeitungseinrichtungen, zwischen denen eine Datenkommunikation erfolgt auch für Anwendungen eingesetzt werden, bei denen eine erfindungsgemäße Bestimmung von Ist-Position und Kennung an einem von der Ausgabe des Vergleichs gänzlich verschiedenen Ort erfolgt, wobei diesbezüglich die Entfernung der Orte keine Rolle spielt, da nach der Vermessung der Identifikationsmarken im realen Raum und der Übertragung der Messwerte in den virtuellen Raum ein Weiterverarbeitung lediglich im virtuellen Raum erfolgen kann, wobei diese Verarbeitung ortsunabhängig erfolgen kann auf der Grundlage bekannter Datenübermittlungsverfahren und -mittel. Beispielsweise könnte so ein Feedback für eine Re-Positionierung von Personen oder Gegenständen oder auch die Kontrolle einer ferngesteuerten Bewegung erfolgen.

Bei einer bevorzugten Ausführungsform der vorliegenden Erfindung weist die wenigstens eine Datenverarbeitungseinrichtung oder aber eine mit ihr verbundene Datenverarbeitungseinrichtung eine Anzeigeeinrichtung auf, durch welche eine graphische Darstellung der Ist-Position der wenigstens einen Identifikationsmarke, der Soll-Position der wenigstens einen Identifikationsmarke und/oder die virtuelle Repräsentation ausgegeben wird.

Bevorzugt ist die Anzeigeeinrichtung für einen Benutzer gut sichtbar angebracht, wie z. B. an einer Wand eines Raumes, und/oder die Anzeige erfolgt durch eine Anzeigeeinrichtung der mobilen Datenverarbeitungseinrichtung. Alternativ oder zusätzlich dazu kann auch vorgesehen sein, die Anzeige durch eine Video- oder Laserprojektion herzustellen, bei der beispielsweise die Sollund Ist-Positionen der Identifikationsmarken durch punktuelle Beleuchtung eines Gegenstandes oder eines Menschen angezeigt werden. Weiterhin kann alternativ oder zusätzlich zu den vorherigen Anzeigeeinrichtungen eine vom Anwender tragbare Anzeigeeinrichtung vorgesehen sein, welche beispielsweise in Form einer Brille angebracht ist und eine Bildprojektion der Anzeige auf die Retina des Benutzers vornimmt.

Die graphische Ausgabe der Ist- und/oder Soll-Position sowie ggf. der virtuellen Repräsentation ermöglicht es auf einfache Weise, beispielsweise für einen anwesenden Nutzer des Systems, zu erkennen, in wieweit und wohin eine Nachpositionierung und/oder Umlagerung erfolgen muss, so dass die Datenverarbeitungseinrichtung als Ergebnis des Vergleichs zwischen Ist-Position und Soll-Position dieser Identifikationsmarke eine "Übereinstimmung" ausgibt. bd Bei einer bevorzugten Ausführungsform der vorliegenden Erfindung wird, für den Fall, dass die Datenverarbeitungseinrichtung als Ergebnis des Vergleichs der Soll- mit der Ist-Position der wenigstens einen Identifkationsmarke ein "keine Übereinstimmung" repräsentierendes Signal zur Weiterverarbeitung ausgibt, ein Verschiebungsvektor innerhalb der virtuellen Repräsentation zwischen der Ist-Position und der Soll-Position der wenigstens einen Identi&kadonsmarke gebildet und, vorzugsweise zusammen mit der virtuellen Repräsentation durch die Anzeigeeinrichtung angezeigt. Auf diese Weise ist es für einem Nutzer des Systems besonders einfach zu erfassen, durch welche Art der Umlagerung bzw. Verschiebung sämtliche Ist-Positionen mit den jeweiligen Soll-Positionen vorzugsweise mehrerer Identifikationsmarken im Rahmen der Genauigkeit der erforderlichen Positionierung in Übereinstimmung gebracht werden können. Nach bzw. während einer Bewegung bzw. Umlagerung wird dann erneut die Position der Identifikationsmarken und ggf. die Darstellung für den Nutzer angepasst um eine geeignete Antwort auf die durchgeführte Bewegung bzw. Umlagerung zu erhalten.

Besonders bevorzugt dient der ggf. kontinuierlich bestimmte Verschiebungsvektor darüber hinaus als Grundlage für die Ansteuerung wenigstens eines Stellelementes, um den wenigstens eine Identifikationsmarke automatisch und ohne einen manuellen Eingriff durch den Nutzer in ihre Soll-Position zu bringen. Dies kann gegebenenfalls unter Berücksichtigung der erforderlichen Positionierungsgenauigkeit einzelner Identifikationsmarken, insbesondere bei der Verwendung mehrerer Identifikationsmarken in Fällen mit einer Vielzahl von Freiheitsgraden erfolgen. Auf diese Weise ist es möglich, durch das Erfindungsgemäße System nicht lediglich eine Kontrollfunktion für eine Repositionierung wenigstens einer Identifikationsmarke zu erhalten sondern darüber hinaus auch eine automatische Einrichtung bzw. Korrektur der Positionierung wenigstens einer Identifikationsmarke.

Auf diese Weise ist es auch möglich, im Falle ein und derselben Anwendungssituation eine Vielzahl von Soll-Positionen wenigstens einer Identifikationsmarke sequenziell "abzufahren", indem jedes Mal, wenn durch die Datenverarbeitungseinrichtung für die wenigstens eine Identifikationsmarke eine "Übereinstimmung" zwischen Soll- und Ist-Position ausgegeben wird, eine neue (bzw. nächste) Soll-Position für diese Identifikatiohsmarke in der virtuellen Repräsentation positioniert wird und aufgrund dessen ein Verschiebungsvektor bestimmt wird. Dieser Verschiebungsvektor kann dann als Grundlage für die Steuerung einer automatischen Verschiebung der wenigstens einen Identifikationsmarke durch wenigstens ein Stellelement dienen. Auf diese Weise lassen sich mitunter sehr komplexe Trajektorien einer Identifikationsmarke "abfahren", was selbstverständlich auch bedeutet, dass Gegenstände, an welchen der oder die entsprechenden Identifikationsmarken angeordnet sind, im wesentlichen entlang der gleichen Trajektorie geführt werden.

Bei einer weiteren bevorzugten Ausführungsform der vorliegenden Erfindung erfolg eine graphische Ausgabe des Vergleichsergebnisses auf der oder den Anzeigeeinrichtungen, beispielsweise in der Form, dass das Vergleichsergebnis zumindest teilweise in Form einer farbcodierten Bildausgabe, wie z. B. grünes Feld oder rotes Feld, durch Ausgabe von Text-Ergebnismitteilungen, wie z. B. "OK" bzw. "FAIL", wenn die Datenverarbeitungseinrichtung als Vergleichsergebnis ein "Übereinstimmung" bzw. "keine Übereinstimmung" repräsentierendes Signal ausgibt. Besonders bevorzugt kann so eine einfach und schnell visuell erfassbare Information über die Übereinstimmung der Soll- mit den Ist-Positionen einzelner oder aller Identifikationsmarken in die graphische Anzeige integriert werden, indem beispielsweise die Soll- und Ist-Positionen der Identifikationsmarken als Punkte innerhalb der graphisch wiedergegebenen virtuellen Repräsentation angezeigt werden, wobei die Punkt bei einer "Übereinstimmung" grün markiert sind und bei "keine Übereinstimmung" rot. Dies zeigt dem Nutzer schnell und zuverlässig visuell erfassbar an, wenn die Ist-Position der wenigstens einen Identifikationsmarke von dessen Soll-Position abweicht.

Ergänzend oder anstatt einer graphischen Ausgabe des Vergleichsergebnisses kann auch eine Sprachausgabe erfolgen und bevorzugt eine Freigabe bzw. Sperrung wenigstens einer Schaltsperre, vorzugsweise wenigstens einer Software-Schaltsperre, durch die ggf. weitere Prozesse angestoßen und/oder gesteuert werden. Beispielsweise kann ein erfindungsgemäßes System so eingerichtet sein, dass erst nach einer Übereinstimmung der Soll- mit den Ist-Positionen bestimmter vorgegebener oder aller Identifikationsmarken ein Relais betätigt wird, das die Stromzufuhr für weitere Anlagen oder Vorrichtungen einschaltet. Auf diese Weise wird kann bei einer Vielzahl von Anwendungen sicher gestellt werden, dass ohne eine korrekte Positionierung und/oder Nachpositionierung einiger oder aller Identifikationsmarken keine weiteren Prozesse durchgeführt werden, die aufgrund einer Fehlpositionierung möglicherweise schadensverursachende und/oder gefährliche Konsequenzen haben könnten. Derartige Anwendungen werden weiter unten im Rahmen der detaillierten Beschreibung beispielhaft ausgeführt.

Zusätzlich kann durch die Kennungsinformation, die der Identifikationsmarke zugeordnet ist auch sicher gestellt werden, dass keine Verwechslung verschiedener Identifikationsmarken stattfinden und auf diese Weise eine unrichtige Anzeige einer "Übereinstimmung" oder gar Freigabe einer Schaltsperre erfolgen kann.

Bei einer Ausführungsform der Erfindung umfasst die virtuelle Repräsentation Informationen über die erforderliche Genauigkeit der Positionsübereinstimmung der wenigstens einen Identifikationsmarke, wobei insbesondere jeweils Information über die erforderliche Genauigkeit der Positionsübereinstimmung zwischen Soll- und Ist-Position einer Identifikationsmarke in Verbindung mit der Soll-Position der wenigstens einen Identifikationsmarke mit jeweils vorgegebenen Kennung, vorzugsweise innerhalb der virtuellen Repräsentation angegeben ist. Alternativ können die Information über die erforderliche Genauigkeit der Positionsübereinstimmung zwischen Soll- und Ist-Position einer Identifikationsmarke auch unabhängig von der virtuellen Repräsentation gespeichert werden, wobei über die jeweiligen, vorzugsweise eindeutigen Kennungen der Identifikationsmarken eine eindeutige Zuordnung der "Passgenauigkeit" der Positionsübereinstimmung zu den jeweiligen Identifikationsmarken der virtuellen Repräsentation hergestellt werden kann.

Bevorzugt gibt die Datenverarbeitungseinrichtung als Ergebnis des Vergleichs der Soll- mit der Ist-Position der wenigstens einen Identifikationsmarke ein "Übereinstimmung" bzw. "keine Übereinstimmung" repräsentierendes Signal zur Weiterverarbeitung aus, wenn die Ist-Position der wenigstens einen Identifikationsmarke im Rahmen der angegebenen erforderlichen Genauigkeit mit deren Soll-Position in der virtuellen Repräsentation übereinstimmt. Die auf diese weise "Übereinstimmung" bzw. "keine Übereinstimmung" repräsentierenden Signale werden dann im Rahmen der Ausführungsformen der Erfindung, wie vorstehend aber auch weiter unten beschrieben weiterverarbeitet, insbesondere kann eine graphische Ausgabe solcher Übereinstimmungen erfolgen, eine Freigabe von Schaltsperren und dergleichen, wenn eine "Übereinstimmung" innerhalb der für eine oder mehrere Identifikationsmarken festgelegten "Passgenauigkeit" durch das System festgestellt wird.

Auf diese Weise wird es ermöglicht, dass ein Art unterschiedliche Wichtung der Genauigkeiten der Positionsübereinstimmung verschiedener Identifikationsmarken vorgenommen wird, so dass beispielsweise aus einer Mehrzahl von Identifikationsmarken, die Übereinstimmung der Soll- mit der Ist-Position einer Identifikationsmarke besonders genau sein muss, während bei anderen Identifikationsmarken eine weniger genaue Positionsübereinstimmung ausreichend ist. So sind auf den jeweiligen Anwendungsfall des erfindungsgemäßen Systems zugeschnittene "Passgenauigkeiten" der gesamten Anordnung von Identifikationsmarken möglich.

Bei einer besonders bevorzugten Ausführungsform der vorliegenden Erfindung weist die wenigstens eine Datenverarbeitungseinrichtung und/oder eine mit ihr verbundene weitere Datenverarbeitungseinrichtung, beispielsweise einer mobilen Datenverarbeitungseinrichtung, wenigstens eine externe und/oder interne Bildaufzeichnungseinrichtung auf. Bei der externen oder internen Bildaufzeichnungseinrichtung handelt es sich bevorzugt ebenfalls um eine CCD- oder CMOS-Kamera und bevorzugt um eine Videokamera oder eine hochauflösende Videokamera.

In einer Ausführungsform der vorliegenden Erfindung ist die externe und/oder interne Bildaufzeichnungseinrichtung die zweite optische Aufzeichnungsvorrichtung, wobei in diesem Fall die Transformationsinformationen von der Position bzw. Orientierung der Bildaufzeichnungseinrichtung abhängen. Insbesondere werden die Transformationsinformationen bevorzugt einer weiteren, von der Position bzw. Orientierung der Bildaufzeichnungseinrichtung abhängigen Transformation unterzogen, um so jeweils auf die konkrete Position der Bildaufzeichnungseinrichtung korrekt abgestimmte Transformationsinformationen auf die von der ersten optischen Aufzeichnungsvorrichtung ermittelte Positionsinformationen anzuwenden, durch welche die Definition einer region of interest (ROI) in den ortsaufgelösten Informationen über die abgetastete Projektion korrekt ermöglicht wird, je nach dem aus welcher Orientierung und mit welchem Abstand die Bildaufzeichnungseinrichtung auf das Messvolumen der ersten optischen Aufzeichnungsvorrichtung "sieht" - und damit auch, wie die plan-parallele Projektion in der Abtastebene der Bildaufzeichnungseinrichtung bzw. der zweiten optischen Aufzeichnungsvorrichtung ausgestaltet ist.

Beispielsweise kann durch eine mobile Datenverarbeitungseinrichtung selbst eine Positionsbestimmung und/oder -veränderung bestimmt werden, welche bei einer Ausführungsform durch in der mobilen Datenverarbeitungseinrichtung vorgesehene Sensoren gemessen wird. Bei einer weiteren Ausführungsform kann eine Positionsbestimmung und/oder -veränderung durch eine externe Vermessung bestimmt werden der Position der mobilen Datenverarbeitungseinrichtung bestimmt und dieser übermittelt werden.

Bei einer besonders bevorzugten Ausführungsform wird die Bildaufzeichnungseinrichtung dazu verwendet, bei der Erstellung und/oder Bearbeitung der virtuellen Repräsentation und/oder bei der Verwendung des Systems, beispielsweise zu Führungs- und/oder Kontrollzwecken Bilder aufzuzeichnen. Bevorzugt ist auch vorgesehen, dass von der Bildaufzeichnungseinrichtung aufgezeichnete Bilder auf der oder den Anzeigeeinrichtungen der ersten und/oder weiterer Datenverarbeitungseinrichtungen angezeigt werden.

Besonders bevorzugt wird wenigstens ein durch die externe und/oder integrierte Bildaufzeichnungseinrichtung aufgezeichnetes Bild zusammen oder verbunden mit der virtuellen Repräsentation, vorzugsweise bei deren Erstellung in der Speichereinrichtung gespeichert. In Verbindung mit der Darstellung der virtuellen Repräsentation kann dann das aufgezeichnete Bild auf wenigstens einer Anzeigeeinrichtung angezeigt werden, so dass eine mögliche Abweichung der Anordnung von Komponenten, Personen und/oder andere Gegenstände schnell und einfach visuell wahrgenommen werden und korrigiert werden kann.

Vorzugsweise wird das wenigstens eine von der Bildaufzeichnungseinrichtung aufgezeichnete Bild vor dessen Speicherung einer Bildbearbeitung unterzogen, insbesondere einer Kontrasterhöhung, Segmentierung, Kantenerkennung, Subtraktion und dergleichen, wodurch gegebenenfalls Konturen der bei er Erstellung der virtuellen Repräsentation vorliegenden Aufzeichnungssituation verstärkt und damit eine verbesserte visuelle Wahrnehmung bei der Wiedergabe erzielt werden können.

Besonders bevorzugt wird das von der Bildaufzeichnung aufgezeichnete und/oder das gespeicherte Bild zusammen mit der Ist-Position, der Soll-Position und/oder der virtuellen Repräsentation angezeigt. Dies kann beispielsweise durch eine Anzeige nach Art einer sog. "augmented reality" erfolgen, bei der ein von der Bildaufzeichnungseinrichtung live aufgenommenes Videobild mit graphischen Elementen, die die Soll- und/oder Ist-Positionen der Identifikationsmarken kennzeichnen und/oder die virtuelle Repräsentation überlagert wird.

Bei dieser Ausgestaltung der vorliegenden Erfindung kommt die Leistungsfähigkeit des erfindungsgemäßen Systems voll zur Geltung, insbesondere wenn es sich bei der wenigstens einen ersten Datenverarbeitungseinrichtung um eine mobile Datenverarbeitungseinrichtung handelt, die eine integrierte Bildaufzeichnungseinrichtung aufweist. Durch die Erfassung der Position der mobilen Datenverarbeitungseinrichtung kann deren Kameraperspektive mit Bezug sowohl auf das Messvolumen als auch die virtuelle Repräsentation und die diesbezüglich gespeicherte Soll-Position der wenigstens einen Identifikationsmarke ermittelt und dem von der Bildaufzeichnungseinrichtung aufgezeichneten Videobild in korrekter Lage- und Perspektive überlagert werden. Ebenso kann die vom System gemessene Ist-Position der wenigstens einen Identifikationsmarke ermittelt und dem von der Bildaufzeichnungseinrichtung aufgezeichneten Videobild in korrekter Lage und Perspektive überlagert werden und darüber hinaus auch graphische oder Text-Kennzeichnungen, die eine "Übereinstimmung" oder "keine Übereinstimmung" signalisieren.

Eine Bewegung der mobilen Datenverarbeitungseinrichtung wird wiederum vom System erkannt und führt zu einer Neuberechnung der überlagerten Informationen, so dass wiederum mit Bezug auf die neue Position der mobilen Datenverarbeitungseinrichtung eine hinsichtlich Lage und Perspektive korrekte Darstellung der virtuellen Repräsentation innerhalb bzw. oberhalb des Videobildes erfolgt. Eine derartige Nachberechnung bzw. Korrektur der Darstellung erfolgt vorzugsweise live so dass der Benutzer bei der Betrachtung der Anzeigeeinrichtung stets eine einfach zu erfassende und vollständige Information erhält, die jeweils die von ihm (durch die Videokamera) gewählte Perspektive des Videobildes korrekt ergänzen.

Eine ähnliche Funktionalität kann allerdings auch mit stationär angeordneten Bildaufzeichnungseinrichtungen erzielt werden, wenngleich hier im Vordergrund steht, dass das von der Bildaufzeichnungseinrichtung aufgezeichnete und gespeicherte Bild dem Live-Bild vorzugsweise neben den weiteren Informationen über Position bzw. "Übereinstimmung" oder "keine Übereinstimmung" überlagert wird, so dass für den Bediener eine leicht zu erfassende "Anleitung" entsteht, wie er die aufgezeichnete Situation bei der Erstellung der virtuellen Repräsentation wieder herstellen kann, vorzugsweise durch eine grobe Einrichtung durch die Überlagerung der aufgezeichneten Bilder und eine daran anschließende Feinjustierung mittels Re-Positionierung und - Lagerung bis das System für alle Identifikationsmarken ein "Übereinstimmung" kennzeichnendes Signal ausgibt und gegebenenfalls eine Schaltsperre freigibt.

Bei einer besonders bevorzugten Ausführungsform werden die Soll- und/oder Ist-Positionen sowie die virtuelle Repräsentation und gegebenenfalls auch die graphische Repräsentation einer "Übereinstimmung" bzw. "keiner Übereinstimmung", die jeweils vorzugsweise dreidimensionale Informationen sind (3D- Informationen) unter Berücksichtigung der Perspektive der Bildaufzeichnungseinrichtung, die im Falle einer mobilen Datenverarbeitungseinrichtung über deren Position bestimmt werden kann, als Projektion in eine Anzeigefläche der Anzeigeeinrichtung der wenigstens einen Datenverarbeitungseinrichtung dargestellt, um so eine für den Betrachter der Anzeigeeinrichtung perspektivisch richtige und die räumliche Situation korrekt wiedergebende Darstellung durch die Anzeigeeinrichtung zur Verfügung zu stellen. Eine derartige Projektion von 3D-Informationen in die Anzeigefläche unter Berücksichtigung des Blickpunktes des Betrachters der Anzeigeeinrichtung ist beispielsweise aus der Ray-Tracing-Technologie bekannt und kann gegebenenfalls auf die Anwendungssituation angepasst bei der vorliegenden Erfindung zum Einsatz kommen.

Eine solche Projektion sämtlicher 3D-Informationen in die Anzeigefläche bei gleichzeitiger Überlagerung eines von einer Bilderfassungseinrichtung aufgezeichneten Live-Bildes ermöglicht für den Benutzer des erfindungsgemäßen Systems sowohl eine akkurate visuelle Wahrnehmung und Wiederherstellung einer aufgezeichneten Situation, die gleichzeitig aber auch durch die virtuellen Repräsentation und die hierin vorgenommenen Definitionen der Soll-Positionen der Identifkationsmarken automatisiert und hochgenau überprüft werden kann.

Das Erfindungsgemäße System findet in einer Vielzahl von Anwendungen Verwendung, insbesondere in solchen Anwendungen, in denen die genau Wiederherstellung einer Positionierung von Gegenständen und/oder Menschen erforderlich ist. Insbesondere findet eine System gemäß der vorliegenden Erfindung Verwendung bei der Kontrolle der Positionierung einer Mehrzahl von Identifikationsmarken relativ zueinander und/oder absolut innerhalb der virtuellen Repräsentation, wobei die Identifikationsmarken insbesondere an einem oder mehreren Gegenständen und/oder an Menschen angeordnet sind. Besonders bevorzugt findet das erfindungsgemäße System Verwendung bei der Wiederherstellung der Anordnung von Identifikationsmarken nach einem Verlust der relativen Positionierung zueinander und/oder der absoluten Positionierung bezüglich der virtuellen Repräsentation, insbesondere zur Repositionierung eines Menschen und/oder von Gegenständen bezüglich eines Menschen.

Eine Identifikationsmarke wie sie vorteilhafterweise mit einem System Gemäß der vorliegenden Erfindung Verwendung findet weist ein flexibles Substrat auf, welches vorzugsweise aus einem bio-kompatiblen Kunststoff besteht. Überdies besteht das Substrat der Identifikationsmarke gemäß der vorliegenden Erfindung bevorzugt aus einem geschäumten oder extrudierten bio-kompatiblen Kunststoff. Bevorzugte Längen und Breiten des, vorzugsweise flächigen Substrates liegen in der Größenordnung von Zenti- und Dezimetern; bevorzugte Dicken im Bereich von Mikro- und Millimetern.

Die Identifikationsmarke weist ein bevorzugt auf einer Oberfläche des Substrats angeordnetes optisches, retroreflektierendes Element auf, welches bevorzugt Kreisförmig, drei- oder viereckig ist aber auch beliebige andere geometrische Formen aufweisen kann. Das retroreflektierende Element ist bevorzugt zur Verwendung im Bereich des nahinfraroten und/oder infraroten Spektrums optimiert.

Die Identifikationsmarke weist zudem ein auf einer Oberfläche des Substrats angeordnetes optisches, signalmodulierendes Element auf. Bevorzugt befinden sich das retroreflektierende Element und das signalmodulierende Element auf derselben Oberfläche des Substrats. Das signalmodulierende Element ist bevorzugt zur Verwendung im Bereich des sichtbaren Spektrums optimiert und ist bevorzugt Kreis-, strich- oder ringförmig, drei-, vier- oder vieleckig zusammenhängend oder unterbrochen und/oder ein- oder mehrfarbig ausgeführt. Das signalmodulierende Element ist insbesondere so ausgestaltet, dass eine möglichst effiziente und deutlich messbare Modulation eines eintreffenden oder ausgestrahlten Signals bei der jeweiligen Wellenlänge erfolgt.

Bei einer bevorzugten Ausführungsform der Identifikationsmarke weist die Identifikationsmarke auf der dem retroreflektorischen und der signalmodulierenden gegenüber liegenden Oberfläche einen Adhäsivklebstoff auf und ist bevorzugt damit beschichtet. Vorzugsweise ist der Adhäsivklebstoff ebenfalls bio-kompatibel und insbesondere geeignet auf der menschlichen Haut über einen längeren Zeitraum von Tagen oder Wochen zu verbleiben.

Bei einer Ausführungsform der Identinkationsmarke ist das signalmodulierende Element so ausgeführt, dass es ein auftreffendes optisches Signal bzw. auftreffende optische Strahlung moduliert und/oder beugt. Das so modulierte optische Signal kann dann wiederum von einer optischen Aufzeichnungsvorrichtung, welche zur Aufzeichnung derart modulierter optischer Signale eingerichtete ist, erfasst werden. Hierbei handelt es sich also um eine passive Variante einer optischen Modulation des eintreffenden optischen Signals.

Bei einer weiteren Ausführungsform der Identifikationsmarke ist das signalmodulierende Element so ausgeführt, dass es modulierte optische Strahlung aussendet. Die so modulierte optische Strahlung kann dann ebenfalls von einer optischen Aufzeichnungsvorrichtung, welche zur Aufzeichnung derart modulierter optischer Strahlung eingerichtete ist, erfasst werden. Hierbei handelt es sich also um eine aktive Variante einer optischen Modulation eines ausgesendeten optischen Signals. Derartige signalmodulierende Element können beispielsweise Leuchtdioden und bevorzugt organische Leuchtdioden sein, welche auf einem flächigen Bereich der Oberfläche der Identifikationsmarke angebracht sind.

Bevorzugt weisen die Identifikationsmarken über dies einen Schaltkreis mit einer Antenne auf; der eine drahtloses Auslesen eines Speichers des Schaltkreises erlaubt. Solche Schaltkreise sind im Stand der Technik bekannt und finden in sog. RFID-Tags (Radio Frequency Identification) Anwendung. Durch die Kombination sowohl optisch als auch RF-abtastbarer Kennungen in diesen Identifikationsmarken besteht auch die Möglichkeit eine weitere Identifikation und/oder Gruppeneinteilung der Identifikationsmarken vorzunehmen und insbesondere Identifikationsmarken zu erfassen, die sich außerhalb des Messvolumens der ersten optischen Aufzeichnungsvorrichtung befinden. In einem derartigen Fall könnte beispielsweise ein entsprechender Hinweis auf der Anzeigeeinrichtung der Datenverarbeitungseinrichtung ausgegeben werden.

Im Rahmen der nachfolgenden detaillierten Beschreibung wird lediglich ein Einzelfall der Verwendung der vorliegenden Erfindung detailliert ausgeführt. Beschränkungen der ganz allgemeinen Lehre der vorliegenden Erfindung, wie sie vorstehend dargestellt wurde und sich darüber hinaus für den Fachmann ergibt stellen diese Beschreibungen einzelner Ausführungsformen allerdings ausdrücklich nicht dar.

Die Merkmale und Vorteile der vorliegenden Erfindung ergeben sich zumindest teilweise auch aus der nachfolgenden detaillierten Beschreibung verschiedener Ausführungsformen der Erfindung in Verbindung mit den Zeichnungen und den Ansprüchen. Es zeigt:
- Fig. 1: eine schematische Darstellung einer ersten Ausführungsform der vorliegenden Erfindung in einer ersten allgemeinen Anwendungssituation;
- Fig. 2: eine schematische Darstellung einer Anzeige der Anzeigevorrichtung der ersten Datenverarbeitungseinrichtung gemäß Fig. 1;
- Fig. 3: eine schematische Darstellung von Identifikationsmarken gemäß der vorliegenden Erfindung;
- Fig. 4: eine schematische Darstellung einer weiteren Ausführungsform der vorliegenden Erfindung in einer weiteren Anwendungssituation.

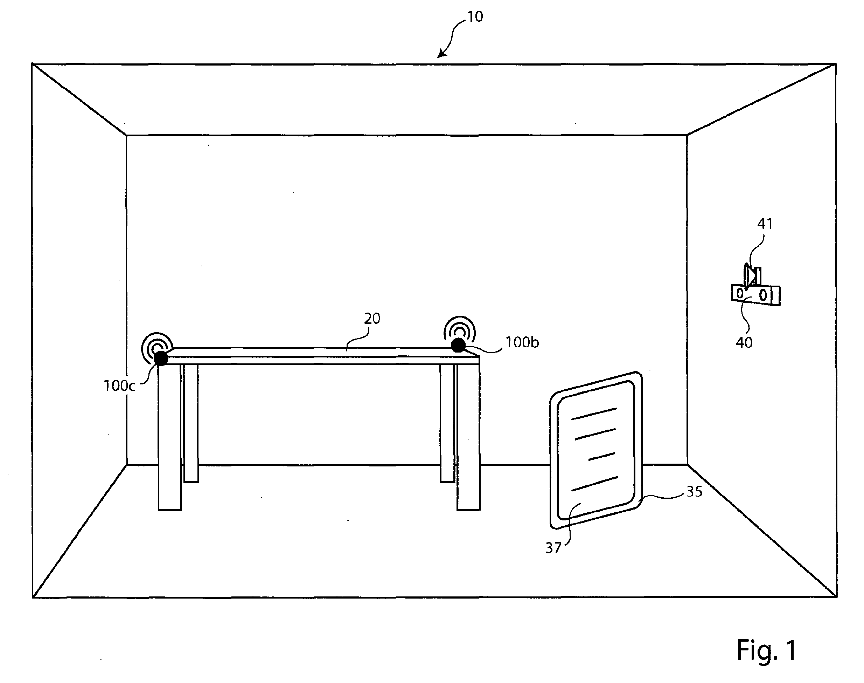

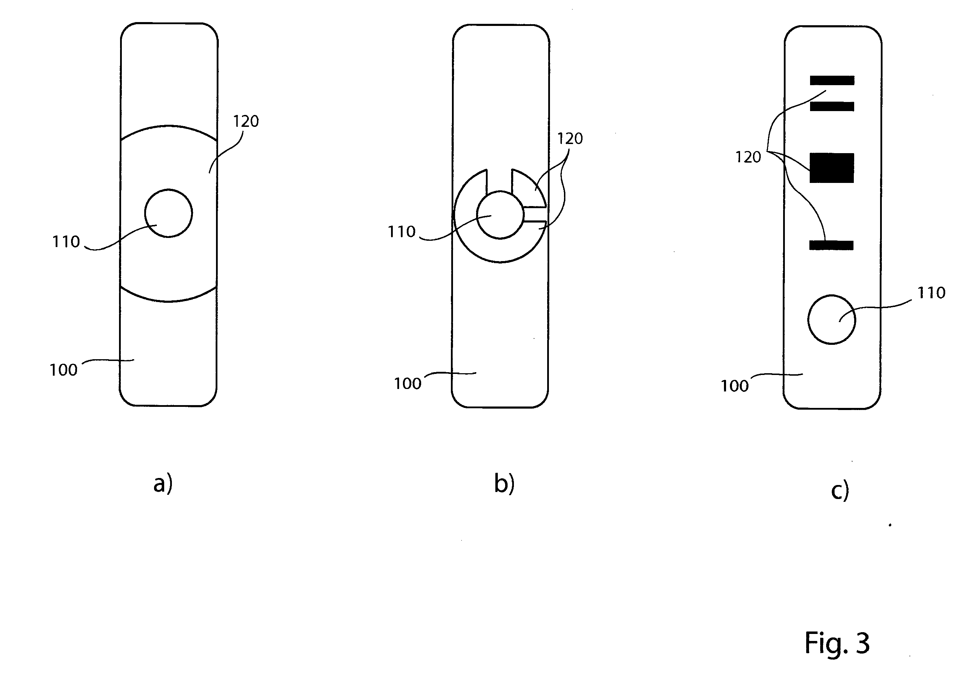

Fig. 1 zeigt eine schematische Darstellung einer ersten Ausführungsform der vorliegenden Erfindung in einer beispielhaften ersten allgemeinen Anwendungssituation. In einem (realen) Raum 10 ist ein Gegenstand 20 angeordnet, welcher an zwei Punkten, die im Beispiel der Fig. 1 an dessen gegenüber liegenden Ecken liegen, mit Identifikationsmarken 100b, 100c versehen ist. In diesem Beispiel handelt es sich um Identifikationsmarken 100 der passiven Variante, die beispielsweise selbstklebend ausgeführt sind, wodurch ein leichtes Anbringen derselben möglich ist. Sämtliche Identifikationsmarken besitzen im vorliegenden Ausführungsbeispiel eine individuelle Kennung 120 in Form eines segmentierten Rings unterschiedlicher Farbe (vgl. auch Fig. 3b), welcher um einen Retroreflektor 110 herum angebracht ist, so dass eine Verwechseln der Identifikationsmarken nicht möglich ist.

Innerhalb des Raumes 10 ist eine erste optische Aufzeichnungsvorrichtung in Form einer stereoskopischen Kamera 40 angebracht, deren Messvolumen einen Großteil des Raumes 10 erfasst. Über eine geeignete Kommunikationsverbindung, wie z. B. infrarot, WLAN oder dergleichen ist die stereoskopischen Kamera 40 mit der Datenverarbeitungseinrichtung 35 verbunden, so dass die Datenverarbeitungseinrichtung 35 von der stereoskopischen Kamera 40 Positionsinformationen der Retroreflektoren 110, welche auf den Identifikationsmarken 100b, 100c angebracht sind, erhält. Die Datenverarbeitungseinrichtung 35 weist eine graphische Anzeigeeinrichtung 37 auf, mit welcher einem Benutzer visuell Informationen präsentiert werden. Vorzugsweise ist die Datenverarbeitungseinrichtung 35 mobiler Art, also beispielsweise ein Tablettcomputer.

Bei der gezeigten Ausführungsform sind die Identifikationsmarken 100b, 100c in der Art ausgeführt, dass sie von an der stereoskopischen Kamera 40 angebrachten Infrarotlichtquellen ausgesendetes Licht mittels der Retroreflektoren 110 zurück in Richtung der stereoskopischen Kamera 40 reflektieren. Auf diese Weise kann die stereoskopische Kamera 40 in an sich bekannter Weise eine genaue Lokalisierung und ggf. auch Lagebestimmung der Identifikationsmarken 100b, 100c vornehmen. Die Informationen über die Positionen der Identifikationsmarken 100b, 100c werden der Datenverarbeitungseinrichtung 35 übermittelt.

Zusätzlich zur stereoskopischen Kamera 40 ist eine zweite optische Aufzeichnungsvorrichtung in form einer hochauflösenden CCD-Videokamera vorgesehen, welche durch eine vorgeschaltete Optik eine plan-Projektion des im wesentlichen vollständigen Messvolumens der stereoskopischen Kamera auf dem CCD-Element abgebildet erhält. Die CCD-Videokamera erfasst so die auf den Identifikationsmarken vorgesehenen individuellen Kennungen, wobei diese Kennungsinformationen an Orten der aufgezeichneten bzw. abgetasteten Bildinformation vorliegen, die unter anderem von der Position im Raum und insbesondere vom Abstand der Identifikationsmarke von der CCD-Videokamera abhängt.

Die vom CCD-Element aufgezeichnete Bildinformation wird ebenfalls an die Datenverarbeitungseinrichtung 35 übermittelt. Aufgrund der in der Datenverarbeitungseinrichtung gespeicherten Transformationsinformationen wird nun anhand der von der stereoskopischen Kamera ermittelten Positionsinformationen unter Anwendung der Transformationsinformationen der Ort bzw. die Lokalisierung der Kennungsinformationen in der plan-Projektion und somit auch der Bildinformation ermittelt. Dieser Bereich der Bildinformation wird in Folge dessen auf das Vorhandensein von Kennungsinformationen hin analysiert und die erkannten Kennungen ermittelt.

Im Anschluss hieran erfolgt ein Vergleich der durch die stereoskopische Kamera ermittelten Positionsinformationen sowie der auf dieser Grundlage mittels der Transformationsinformationen aus den Bildinformationen ermittelten Kennungsinformationen mit den in einer virtuellen Repräsentation dieser Situation vorgesehenen Soll-Positionen der entsprechenden "virtuellen" Identifikationsmarken, wobei auch ein Abgleich der in der virtuellen Repräsentation gespeicherten Kennungen mit den ermittelten Kennungen erfolgt, und hiernach, sofern eine Übereinstimmung aller Parameter ermittelt wird die Ausgabe eines "Übereinstimmung" repräsentierenden Signals. Der Vergleich der Informationen erfolgt bevorzugt für alle aufgezeichneten Identifikationsmarken gleichermaßen.

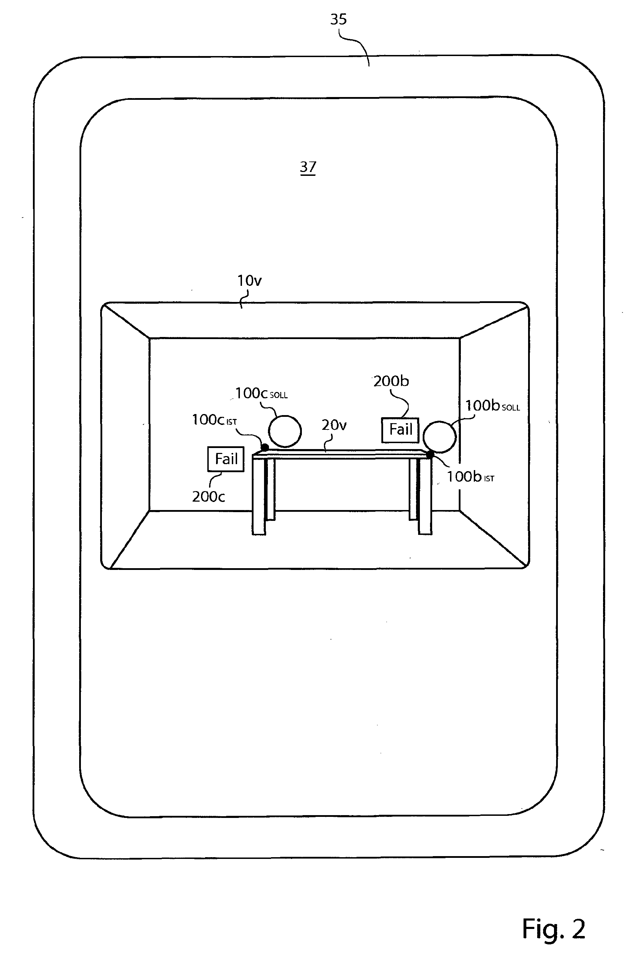

Unter Bezugnahme auf Fig. 2 und, soweit erforderlich, auf Fig. 1 wird nun die Anwendungssituation und die Funktion der hier gezeigten Ausführungsform der Erfindung beschrieben. Fig. 2 zeigt dabei das auf der graphischen Anzeigeeinrichtung 37 der mobilen Datenverarbeitungseinrichtung 35 gezeigte Bild zumindest teilweise. Das angezeigte Bild stellt dabei eine virtuelle Repräsentation der Situation dar, wobei der Raum 10v dem realen Raum 10 entspricht und der schematisierte Gegenstand 20v dem realen Gegenstand 20 entspricht.

Die durch die Anzeigeeinrichtung 37 der mobilen Datenverarbeitungseinrichtung 35 dargestellte virtuelle Repräsentation zeigt zudem die durch das System auf der Grundlage der Positionsbestimmung der stereoskopischen Kamera 40 bestimmten Ist-Positionen 100b_{IST} und 100c_{IST} der Identifikationsmarken 100b, 100c innerhalb der virtuellen Repräsentation, hier als gefüllte Punkte dargestellt. Zudem werden die innerhalb bzw. mit Bezug zur virtuellen Repräsentation in der Speichereinrichtung gespeicherten Soll-Positionen 100b_{SOLL} und 100c_{SOLL} der entsprechenden Marker 100b, 100c angezeigt, hier als durchsichtige Kreise.

Wie sich erkennen lässt besteht zwischen der Ist-Position 100b_{IST'} 100c_{IST} der beiden Marker 100b und 100c und deren Soll-Position 100b_{SOLL}, 100c_{SOLL} keine Übereinstimmung, was durch die Textanzeige "FAlL" 200b, 200c angezeigt wird. Als Ergebnis kann der Betrachter der Anzeigevorrichtung bei dieser Ausführungsform somit unmittelbar erkennen, dass die Position des Gegenstandes 20 bezüglich seiner Soll-Position, die sich aus den Soll-Positionen 100b_{SOLL}, 100c_{SOLL} ergibt, inkorrekt platziert ist und aufgrund der Darstellung der Anzeigevorrichtung eine Verschiebung bzw. Umlagerung des Gegenstandes 20 vornehmen, solange bist für die Marker 200b und 200c ebenfalls "Übereinstimmung", also "OK" angezeigt wird.

Aufgrund der individuellen Kennungen der Marker 100b, 100d, die zusammen mit deren Positionen bevorzugt sowohl erfasst werden als auch vorzugsweise innerhalb der virtuellen Repräsentation gespeichert sind, eine Verwechslung der Marker 100b und 100c ausgeschlossen, so dass eine Fehlplatzierung des Gegenstandes 20 durch das System erkannt und innerhalb der virtuellen Repräsentation jedenfalls dargestellt werden kann, selbst wenn die Position des Gegenstandes 20 im realen Raum, beispielsweise aufgrund einer Symmetrie des Gegenstandes richtig zu sein scheint.

Alternativ zu den Textanzeigen 200b, 200c könnten auch farbliche Variationen der jeweiligen Symbole für jeweils ein Paar bestehend aus Soll-Positionen 100b_{SOLL}, 100c_{SOLL} und Ist-Positionen 100b_{IST}, 100c_{IST} angezeigt werden, so dass beispielsweise die Symbole für die Soll- und Ist-Positionen übereinstimmen eine grüne Farbe haben und die für die Soll- und Ist-Positionen nicht übereinstimmen eine rote Farbe.

Die Figuren 3a bis 3c zeigen Ausführungsformen von Identifikationsmarken 100 gemäß der vorliegenden Erfindung. Demnach bestehen die Identifikationsmarken 100 aus einem im Wesentlichen rechteckigen Substrat auf dessen - gezeigter - Oberseite ein retroreflektorisches Element 110 in Form eines Kreises angebracht ist. Im Falle der Fig. 3a ist das retroreflektorische Element 110 von einem Kennungsring 120 im Wesentlichen konzentrisch umgeben, wobei der Kennungsring in diesem Ausführungsbeispiel eine je nach Kennung verschiedene Farbe aufweist. Durch die Farbe des Kennungsrings 120 kann beispielsweise eine Zuordnung der Identifikationsmarke 100 zu einer von mehreren Gruppen von Identifikationsmarken erfolgen.

Fig. 3b zeigt eine der Fig. 3a ähnliche Variante, wobei die Kennung hier nicht in der Form der Farbgebung des Kennungsrings besteht sondern vielmehr in der Ausgestaltung und Orientierung von Kreisringsegmenten 120, welche wiederum im Wesentlichen konzentrisch um das retroreflektorische Element 110 angeordnet sind. Anhand der Zuordnung der Kreisringsegmente 120 sowie deren konkreter Ausgestaltung kann wiederum eine Zuordnung der Identifikationsmarke 100 zu einer von mehreren Gruppen von Identifikationsmarken erfolgen.

Schließlich zeigt Fig. 3c eine Variante einer Identifikationsmarke 100, bei der neben dem retroreflektorische Element 110 Kennungsbalken 120 unterschiedlicher Geometrie und mit verschiedenen Abständen angeordnet sind. Je nach Ausführungsform besteht zudem die Möglichkeit, dass die verschiedenen Balken auch unterschiedlich gefärbt sind. Unschwer ist an dieser Stelle die durch die Vielzahl der Kombinationsmöglichkeiten erzielbare Menge verschiedener Kennungen zu erkennen, die darüber hinaus für eine entsprechende Aufzeichnung durch eine erfindungsgemäß ausgeführte zweite Aufzeichnungsvorrichtung bestens geeignet sind.

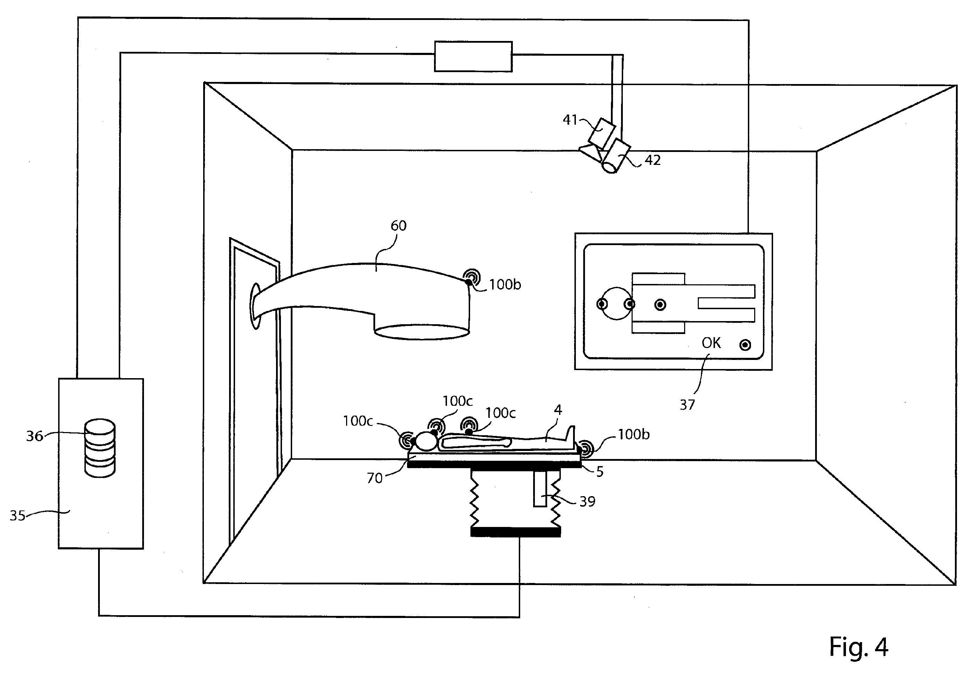

Unter Bezugnahme auf Fig. 4 wird nun eine weitere Ausführungsform und Anwendungssituation der vorliegenden Erfindung beschrieben. Hierbei handelt es sich um eine Anwendung im Bereich der Strahlentherapie, bei welcher eine exakte Positionierung eine Patienten sowie die Abstimmung aller behandlungsrelevanten Parameter auf die Behandlungssituation von außerordentlicher Bedeutung ist.

Fig. 4 zeigt schematisch eine Vorbereitung der Behandlung eines Patienten in einem Behandlungsraum zur Ionen-Bestrahlung. Der Patient 4 ist dabei liegend auf einem in alle Raumrichtungen verschieblichen Behandlungstisch 5 und auf einer patientenspezifischen Immobilisierungs-Einrichtung 70 in Form eines Vakuumkissens gelagert, wobei das Isozentrum der Bestrahlung unterhalb der Gantry 60 und vorliegend innerhalb des Kopfes des Patienten liegt. Innerhalb des Behandlungsraumes sind erste und zweite Aufzeichnungsvorrichtungen 40, 41 oberhalb des Behandlungstisches 5 an der Decke angeordnet. Die Aufzeichnungsvorrichtungen 40, 41 sind mit einer vorzugsweise außerhalb des Behandlungsraumes angeordneten ersten Datenverarbeitungseinrichtung 35 verbunden. Die Datenverarbeitungseinrichtung weist eine Speichereinrichtung 36 auf, welche eine Datenstruktur enthält, die eine virtuelle Repräsentation zumindest von Teilen der zuvor beschriebenen Komponenten des Behandlungsraums sowie des Patienten darstellt. Mit der Datenverarbeitungseinrichtung 35 ist überdies eine Anzeigeeinrichtung 37 verbunden.

Wie zuvor bereits mehrfach und ausführlich beschrieben bestimmen die erste und zweite Aufzeichnungsvorrichtung 40, 41 die Positionen der im Behandlungsraum verteilten Identifikationsmarken 100b, 100c sowie deren Kennungen und es wird ein Vergleich mit den gespeicherten Positionen der Identifikationsmarken mit entsprechenden Kennungen in der virtuelle Repräsentation durchgeführt.

Auf der Anzeigeeinrichtung 37 wird für das Bedienpersonal gut sichtbar eine graphische Darstellung der virtuellen Repräsentation gezeigt, wobei, wie in Fig. 4 sichtbar, hier auch die Anordnung der Identifikationsmarken 100b, 100c sowie des Patienten 4 auf dem Vakuumkissen 70 angezeigt wird. Weitere bei einer Strahlenbehandlung verwendete, hier jedoch aus Gründen der Klarheit und der Einfachheit nicht erwähnte Gegenstände, wie z. B. eine Lagerungsmatte, ein Breast-Board und dergleichen können auf die gleiche Weise in die Erfassung und Darstellung innerhalb der virtuellen Repräsentation aufgenommen werden.

Mittels des erfindungsgemäßen Systems kann vor Beginn der Behandlung der Patient 4, welcher in einer Voruntersuchung z. B. mit adhäsiven Identifikationsmarken mit eindeutigen Kennungen an gut zugänglichen Stellen Markiert wurde in exakt die bei der Voruntersuchung/Einrichtung oder bei vorhergehenden Behandlungen vorgelegene Position repositioniert werden. Im Rahmen der Voruntersuchung wird für jeden Patienten dabei eine individuelle virtuelle Repräsentation der Behandlungssituation erstellt der sowohl die Positionen der Identifikationsmarken am Patienten als auch die des Vakuumkissens 70 und der Gantry 60 als Soll-Positionen mit ihren jeweiligen individuellen Kennungen zugefügt werden. Darüber hinaus wird bei der Voruntersuchung bzw. Einrichtung durch eine Bildaufzeichnungseinrichtung ein Bild des Patienten in der korrekten Position aufgezeichnet und der virtuellen Repräsentation ebenfalls zugefügt.

Durch die individuellen Kennungen der Idenrifikationsmarken an allen für den jeweiligen Patient relevanten Behaüdlungsteilen, wie. z. B. dem Vakuumkissen 70 kann sicher gestellt werden, dass eine Fehlbehandlung oder eine Verwechslung von Behandlungskomponenten nicht erfolgen kann. Darüber hinaus kann vom System bereits beim Betreten des Raumes durch den Patienten dessen Identität anhand von Kennungen welche in an den Identifikationsmarken vorgesehenen RFID-Tags gespeichert sind erfasst werden und aufgrund dessen die für diesen Patienten korrekten Behandlungsparameter, wie z. B. die Position der Gantry, Strahlendosis, Blendenstellungen und dergleichen verwechslungssicher eingestellt werden.

Hiernach erfolgt dann eine Repositionierung des Patienten und der Behandlungskomponenten durch das Bedienpersonal mithilfe der durch die Anzeigeeinrichtung 37 wiedergegebenen virtuellen Repräsentation nebst Soll- und Ist-Positionen wesentlicher Identifikationsmarken sowie gegebenenfalls einer Überlagerung eines bei der Einrichtung aufgezeichneten Videobildes mit einem live-Videobild. Darüber hinaus kann das System auf der Grundlage von Verschiebungsvektoren, die anhand der Ist- und Soll-Positionen ermittelt werden können auch eine automatisierte Repositionierung des Patienten vornehmen. Sobald sämtliche Soll- und Ist-Positionen der Identifikationsmarken sowie deren Kennungen "übereinstimmen" zeigt das System dies an und die Behandlung kann begonnen werden.

Wird durch das System eine inkorrekte Repositionierung des Patienten festgestellt, da "keine Übereinstimmung" zwischen Soll- und Ist-Position wenigstens einer Identifikationsmarke erkannt wird, so wird durch das System eine Schaltsperre für den Behandlungsbeginn nicht freigegeben. Gleichermaßen ist möglich, dass bei einer Feststellung "keine Übereinstimmung" zwischen Soll- und Ist-Position wenigstens einer Identifikationsmarke während der Behandlung, beispielsweise aufgrund einer Bewegung des Patienten, eine sofortige Unterbrechung der Bestrahlung erfolgt und auf der Grundlage eines oder mehrerer Verschiebungsvektoren, die anhand der Ist- und Soll-Positionen auch während der Behandlung laufend ermittelt werden können auch eine automatisierte Repositionierung des Patienten erfolgt, bevor die Bestrahlung fortgesetzt wird.

Schließlich besteht auch die Möglichkeit, während der Behandlung laufend, beispielsweise für die am Patienten angeordneten Identifikationsmarken Verschiebungsvektoren zu ermitteln und hierdurch beispielsweise eine durch die Atmung des Patienten verursachte Bewegung eines Tumors im Brustbereich mittels einer dynamischen Nachführung der Patientenposition durch die Stellelemente 39 zu erzielen. Damit wäre eine Situation geschaffen, in der das Isozentrum der Bestrahlung stets im Tumor liegt und somit ein maximaler Behandlungserfolg bei gleichzeitig minimaler Schädigung gesunden Gewebes erzielt wird, selbst unter den erschwerten Bedingungen einer nicht-stationären Tumorlage.

Auch in dem dargestellten Anwendungsfall kann zusätzlich zur Anzeigeeinrichtung eine - nicht dargestellte - mobile Datenverarbeitungseinrichtung zusätzlich zur Datenverarbeitungseinrichtung 35 Verwendung finden. Die mobile Datenverarbeitungseinrichtung erhält dabei von der Datenverarbeitungseinrichtung 35 die virtuelle Repräsentation zur Anzeige.

Durch die Speicherung einer Mehrzahl von Datensätzen von Soll-Positionen für die Behandlung eines Patienten, der beispielsweise mehrere Tumore aufweist, können mittels des erfindungsgemäßen Systems durch des "Abfahrens" von vorgegebenen Trajektorien ganze Behandlungsprotokolle für einen Patienten in einer einzigen Sitzung abgearbeitet werden, so dass z. B. in einem ersten Behandlungsschritt eine Bestrahlung eines ersten Karzinoms in einer ersten Lage des Patienten, bei einem ersten vorgegebenen Neigungswinkel der Gantry 60 mit einer ersten Dosis und für eine erste Dauer erfolgt, und hiernach eine Unterbrechung der Bestrahlung und automatische Repositionierung des Patienten in eine zweite Lage und ein Verdrehen der Position der Gantry 60 zu einem zweiten vorgegebenen Neigungswinkel, wonach eine weitere Behandlung eines zweiten Karzinoms mit einer zweiten Dosis und für eine zweite Dauer erfolgen kann. Weitere Behandlungen mit jeweils dazwischen liegenden automatischen "Repositionierungsfahrten" sind selbstverständlich ebenfalls möglich, wobei jede der Behandlungen auf der Grundlage eines vollständig individuellen Satzes von Behandlungsparametern erfolgen kann.

Die vorliegende Erfindung wurde vorstehend zunächst allgemein und nachfolgend in Bezug auf eine bevorzugte Ausführungsform und Anwendungssituationen mit ihren einzelnen Merkmalen beschrieben. Sämtliche der beschriebenen Merkmale können dabei nahezu beliebig kombiniert werden, was lediglich durch die jeweilige Anwendungssituation und damit verbundene Ausführungsform möglicherweise beschränkt ist. Es wird allerdings ausdrücklich darauf hingewiesen, dass jedwede Kombination von Merkmalen, wie sie vorstehend beschrieben sind möglich ist und im Rahmen der Beschreibung der Erfindung auch als zu ihr gehörig ausdrücklich als mitoffenbart anzusehen ist

## Patentansprüche

1. System zur Erfassung der Kennung und Position wenigstens einer Identifikationsmarke (100), aufweisend:
wenigstens eine erste optische Aufzeichnungsvorrichtung (40), welche so eingerichtet ist, dass mittels dieser ersten optischen Aufzeichnungsvorrichtung die räumliche Position wenigstens einer Identifikationsmarke (100) die innerhalb des Messvolumens der ersten optischen Aufzeichnungsvorrichtung (40) angeordnet ist erfasst werden kann;
wenigstens eine Datenverarbeitungseinrichtung (35), welche mit der ersten optischen Aufzeichnungsvorrichtung (40) zumindest indirekt verbunden ist und von dieser Informationen über die räumliche Position der erfassten Identifikationsmarke (100) übermittelt erhält;
wenigstens eine zweite optische Aufzeichnungsvorrichtung (41), welche so eingerichtet ist, dass mittels dieser zweiten optischen Aufzeichnungsvorrichtung eine plan-Projektion zumindest eines Teils des Messvolumens der ersten optischen Aufzeichnungsvorrichtung ortsaufgelöst abgetastet werden kann; wobei
die wenigstens eine Datenverarbeitungseinrichtung (35) mit der zweiten optischen Aufzeichnungsvorrichtung (41) zumindest indirekt verbunden ist und von dieser ortsaufgelöste Informationen über die abgetastete Projektion übermittelt erhält, und wobei
der wenigstens einen Datenverarbeitungseinrichtung (35) Transformationsinformationen zur Verfügung stehen, welche die Definition einer region of interest (ROI) in den ortsaufgelösten Informationen über die abgetastete Projektion ermöglichen, wobei die ROI auf das Vorhandensein und die Art von Kennungsinformationen hin untersucht werden, um hieraus die Kennung der erfassten Identifikationsmarke (100) zu ermitteln,
**dadurch gekennzeichnet, dass**
in einer mit der wenigstens einen Datenverarbeitungseinrichtung (35) verbundenen ersten Speichereinrichtung (36) eine Datenstruktur vorgesehen ist, die zumindest teilweise eine virtuelle Repräsentation des durch das Messvolumen der ersten optischen Aufzeichnungsvorrichtung (40) aufgespannten Raums beinhaltet, wobei die virtuelle Repräsentation Informationen über die Soll-Position (100_{SOLL}) wenigstens einer Identifikationsmarke sowie wenigstens eine zugeordnete Kennung umfasst; und
die wenigstens eine Datenverarbeitungseinrichtung (35) einen Vergleich zwischen der Ist-Position (100_{IST}) einer Identifikationsmarke und der Soll-Position (100_{SOLL}) einer Identifikationsmarke innerhalb der virtuellen Repräsentation vornimmt sowie einen Vergleich der ermittelten Kennung der erfassten Identifikationsmarke (100) und der innerhalb der Datenstruktur gespeicherten Kennung der entsprechenden Identifikationsmarke;
und als Ergebnis der Vergleiche ein "Übereinstimmung" bzw. "keine Übereinstimmung" repräsentierendes Signal ausgibt.

2. System gemäß Anspruch 1, **dadurch gekennzeichnet, dass** wenigstens eine erste optische Aufzeichnungsvorrichtung (40) eine im infraroten Spektralbereich arbeitende stereoskopische Kamera ist und die wenigstens eine zweite optische Aufzeichnungsvorrichtung (41) eine im sichtbaren Spektralbereich arbeitende CCD- oder CMOS-Kamera ist.

3. System gemäß einem der Ansprüche 1 oder 2, **dadurch gekennzeichnet, dass** die Transformationsinformationen so eingerichtet sind, dass aufgrund der Anwendung der Transformationsinformationen auf die Informationen über die räumliche Position einer Identifikationsmarke (100) eine Lokalisierung derselben Identifikationsmarke in der plan-Projektion erfolgt, wobei auf der Grundlage der Lokalisierung die Definition der ROI in den ortsaufgelösten Informationen über die abgetastete Projektion erfolgt.

4. System gemäß einem der vorhergehenden Ansprüche, **dadurch gekennzeichnet, dass** die wenigstens eine Datenverarbeitungseinrichtung (35) mobil ist, insbesondere eine tragbare Datenverarbeitungseinrichtung ist und vorzugsweise ein tragbarer Computer (Laptop), ein Tablettcomputer, ein Smart-Device oder dergleichen.

5. System gemäß einem der vorhergehenden Ansprüche, **dadurch gekennzeichnet, dass** die wenigstens eine Datenverarbeitungseinrichtung (35) aus einer Mehrzahl zusammenwirkender Datenverarbeitungseinrichtungen besteht, wobei eine Datenkommunikation zwischen den mehreren Datenverarbeitungseinrichtungen vorzugsweise mittels optischer, Funk oder elektrischer Datenverbindungen erfolgt.

6. System gemäß einem der vorhergehenden Ansprüche, **dadurch gekennzeichnet, dass** die Ist-Position (100_{IST}) der wenigstens einen erfassten Identifikationsmarke (100), die Soll-Position (100_{SOLL}) der entsprechenden wenigstens einen Identifikationsmarke und/oder die virtuelle Repräsentation graphisch durch eine mit der wenigstens einen Datenverarbeitungseinrichtung (35) zumindest indirekt verbundenen Anzeigeeinrichtung (37) ausgegeben wird.

7. System gemäß einem der vorhergehenden Ansprüche, **dadurch gekennzeichnet, dass** die virtuelle Repräsentation Informationen über die erforderliche Genauigkeit der Positionsübereinstimmung der wenigstens einen Identifikationsmarke (100) umfasst, und insbesondere in Verbindung mit der Soll-Position (100_{SOLL}) wenigstens einer Identifikationsmarke mit jeweils vorgegebenen Kennung die Information über die erforderliche Genauigkeit der Positionsübereinstimmung zwischen Soll- und Ist-Position dieser Identifikationsmarke (100) angegeben ist.

8. System gemäß Anspruch 8, **dadurch gekennzeichnet, dass** die Datenverarbeitungseinrichtung (35) als Ergebnis des Vergleichs der Soll- mit der Ist-Position der wenigstens einen Identifikationsmarke (100) ein "Übereinstimmung" bzw. "keine Übereinstimmung" repräsentierendes Signal zur Weiterverarbeitung ausgibt, wenn die Ist-Position (100_{IST}) der wenigstens einen Identifikationsmarke (100) im Rahmen der angegebenen erforderlichen Genauigkeit mit deren Soll-Position (100_{SOLL}) in der entsprechenden Identifikationsmarke der virtuellen Repräsentation übereinstimmt.

9. System gemäß einem der vorhergehenden Ansprüche, **dadurch gekennzeichnet, dass** für den Fall, dass die Datenverarbeitungseinrichtung (35) als Ergebnis des Vergleichs der Sollmit der Ist-Position der wenigstens einen Identifikationsmarke (100) ein "keine Übereinstimmung" repräsentierendes Signal zur Weiterverarbeitung ausgibt, ein Verschiebungsvektor innerhalb der virtuellen Repräsentation zwischen der Ist-Position und der Soll-Position der wenigstens einen Identifikationsmarke (100) gebildet und durch die Anzeigeeinrichtung (37) der Datenverarbeitungseinrichtung (35) angezeigt wird und/oder als Grundlage für die Ansteuerung wenigstens eines Stellelementes (39) dient, um die wenigstens eine Identifikationsmarke (100) in ihre Soll-Position zu führen.

10. System gemäß einem der vorhergehenden Ansprüche, **dadurch gekennzeichnet, dass** das Vergleichsergebnis zumindest teilweise in Form einer farbcodierten visuellen Ausgabe, wie z. B. grünes Feld bzw. grüner Punkt oder rotes Feld bzw. roter Punkt, durch Ausgabe von Text-Ergebnismitteilungen (200), wie z. B. "OK" bzw. "FAIL", durch Sprachausgabe und/oder durch Freigabe oder Sperrung wenigstens einer Schaltsperre, vorzugsweise wenigstens einer Software-Schaltsperre, ausgegeben wird, wenn die Datenverarbeitungseinrichtung (35) als Vergleichsergebnis ein "Übereinstimmung" bzw. "keine Übereinstimmung" repräsentierendes Signal ausgibt.

11. System gemäß einem der vorhergehenden Ansprüche, **dadurch gekennzeichnet, dass** die wenigstens eine Datenverarbeitungseinrichtung (35) wenigstens eine externe und/oder integrierte Bildaufzeichnungseinrichtung (42) aufweist, wobei die Bildauheichnungseinrichtung (42) vorzugsweise eine Videokamera und besonders bevorzugt eine hochauflösende Videokamera umfasst.

12. System gemäß Anspruch 11, **dadurch gekennzeichnet, dass** die Bildaufzeichnungsvorrichtung (42) die zweite optische Aufzeichnungsvorrichtung (41) ist.

13. System gemäß Anspruch 11, **dadurch gekennzeichnet, dass** wenigstens ein durch eine externe und/oder die integrierte Bildaufzeichnungseinrichtung (42) aufgezeichnetes Bild zusammen oder verbunden mit der virtuellen Repräsentation in der Speichereinrichtung (36) gespeichert ist, wobei vorzugsweise das Bild vor dessen Speicherung einer Bildbearbeitung unterzogen wurde, insbesondere einer Kontrasterhöhung, Segmentierung, Kantenerkennung, Subtraktion und dergleichen.

14. System gemäß Anspruch 11 oder 13, **dadurch gekennzeichnet, dass**, eine Überlagerung der Bild- und/oder Textausgabe des Vergleichsergebnisses und/oder des gespeicherten Bildes mit dem von der Bildaufzeichnungseinrichtung aufgezeichneten Bild erfolgt und dieses Überlagerte Bild durch die Anzeigeeinrichtung (37) der wenigstens einen Datenverarbeitungseinrichtung (35) ausgegeben wird.

15. System gemäß einem der vorhergehenden Ansprüche, **dadurch gekennzeichnet, dass** die Transformationsinformationen auf der Grundlage der Position und Orientierung der zweiten optischen Aufzeichnungsvorrichtung (41) relativ zum Messvolumen der ersten optischen Aufzeichnungsvorrichtung (40), insbesondere wenn die zweite optische Aufzeichnungsvorrichtung (41) in der mobilen Datenverarbeitungseinrichtung (35) integriert ist kontinuierlich angepasst werden.

16. System gemäß einem der vorhergehenden Ansprüche, **dadurch gekennzeichnet, dass** die Transformationsinformationen durch eine wenigstens einmalige Bestimmung der Position und der Kennung wenigstens einer Identifikationsmarke (100) durch die erste optische Aufzeichnungsvorrichtung bzw. die zweite optische Aufzeichnungsvorrichtung und das In-Bezugsetzen der Positionsinformation mit der Information über die Lokalisierung der Kennung innerhalb der plan-Projektion erzeugt und/oder kalibriert werden.

17. System gemäß einem der vorhergehenden Ansprüche, **dadurch gekennzeichnet, dass** eine Projektion von 3D-Informationen in eine Anzeigefläche der Anzeigeeinrichtung der wenigstens einen Datenverarbeitungseinrichtung erfolgt, und insbesondere eine Projektion von 3D-Informationen, wie z. B. räumliche Positionsinformationen sowie Informationen der virtuellen Repräsentation nach dem Ray-Tracing-Verfahren in die Anzeigefläche der Anzeigeeinrichtung der wenigstens einen Datenverarbeitungseinrichtung unter Berücksichtigung des Blickpunktes des Betrachters der Anzeigeeinrichtung erfolgt.

18. Verwendung eines Systems gemäß, einem der Ansprüche 1 bis 17 zur Kontrolle der Positionierung einer Mehrzahl von Identifikationsmarken relativ zueinander und/oder absolut innerhalb der virtuellen Repräsentation, wobei die Identifikationsmarken insbesondere an einem oder mehreren Gegenständen und/oder Menschen angeordnet sind.

19. Verwendung gemäß Anspruch 18 zur Widerherstellung der Anordnung von Identifikationsmarken nach einem Verlust der relativen Positionierung zueinander und/oder der absoluten Positionierung bezüglich der virtuellen Repräsentation, insbesondere zur Repositionierung eines Menschen und/oder von Gegenständen bezüglich eines Menschen.

## Claims

1. System for detecting the identifier and the position of at least one identification mark (100), comprising:
at least one first optical recording device (40) being adapted such that, by means of said first optical recording device, the spatial position of at least one identification mark (100) being arranged inside the measurement volume of said first optical recording device (40) can be detected;
at least one data processin eans (35), being at least indirectly connected to said first recording device (40) and receiving information therefrom about the spatial position of said detected identification mark (100);
at least one second optical recording device (41) being adapted such that, by means of said second optical recording device, a plan projection of at least part of the measurement volume of said first optical recording device can be scanned in a spatially resolved manner; where
said at least one data processin eans (35) is at least indirectly connected to said first optical recording device (41) and receives spatially resolved information therefrom about said scanned projection; and where
said at least one data processing means (35) has transformation information available that allows the definition of a region of interest (ROI) in the spatially resolved information regardin said scanned projection, where said ROI are searched for the presence and the type of identifier information in order to determine therefrom the identifier of said detected identification mark (100),
**characterized in that**
a data structure is provided in a first memory device (36) connected to said at least one data processing means (35) and at least partially comprises a virtual representation of said space spanned by said measurement volume of said first optical recording device (40), where said virtual representation comprises information about the target position (100_{SOLL}) of at least one identification mark as well as at least one associated identifier; and
said at least one data processing means (35) performs a comparison between said actual position (100_{IST}) of an identification mark and said target position (100_{SOLL}) of an identification mark within said virtual representation, as well as a comparison of the determined identifier of said detected identification mark (100) and the identifier of said corresponding identification mark stored within said data structure;
and as a result of said comparison outputs a signal representing a "match" or "no match".

2. System according to claim 1, **characterized in that** at least one first optical recording device (40) is a stereoscopic camera operating in the infrared spectral range, and said at least one second optical recording device (41) is a CCD or CMOS camera operating in the visible spectral range.

3. System according to one of the claims 1 or 2, **characterized in that** said transformation information is adapted such that, due to the application of said transformation information to said information regarding said spatial position of an identification mark (100), a localization of the same identification mark occurs in said plan projection, where, based on said localization, the definition of said ROI is performed in said spatially resolved information regarding said scanned projection.

4. System according to one of the preceding claims, **characterized in that** said at least one data processing means (35) is mobile, is in particular a portable data processing means and preferably a portable computer (laptop), a tablet computer, a smart device or the like.

5. System according to one of the preceding claims, **characterized in that** said at least one data processing means (35) comprises a plurality of interacting data processing means, where data communication between said plurality of data processing means is effected preferably by means of optical, radio or wired data connections.

6. System according to one of the preceding claims, **characterized in that** said actual position (100_{IST}) of said at least one detected identification mark (100), said target position (100_{SOLL}) of said corresponding at least one identification mark, and/or said virtual representation are graphically outputted via a display device (37) connected at least indirectly to said at least one data processing means (35).

7. System according to one of the preceding claims, **characterized in that** said virtual representation comprises information on the required accuracy of said position match of said at least one identification mark (100), and in particular, in connection with said target position (100_{SOLL}) of at least one identification mark with respectively predefined identifier, the information on the required accuracy of said position match between said target and actual position of said identification mark (100) is specified.

8. System according to claim 8, **characterized in that** said data processing means (35), as a result of said comparison of said target to said actual position of said at least one identification mark (100), outputs a signal representing a "match" or "no match" for further processing, if said actual position (100_{(IST}) of said at least one identification mark (100) matches its target position (100_{SOLL}) in said respective identification mark of said virtual representation within the scope of said required accuracy specified.

9. System according to one of the preceding claims, **characterized in that**, in the event that said data processing means (35) as a result of said comparison of said target to said actual position of said at least one identification mark (100), outputs a signal for further processing representing "no match", a displacement vector is formed within said virtual representation between said actual position and said target position of said at least one identification mark (100) and displayed by said display device (37) of said data processin means (35) and/or serves as a basis for controllin at least one actuating element (39) in order to guide said at the least one identification mark (100) into its target position.

10. System according to one of the preceding claims, **characterized in that** said comparison result is at least in part outputted in the form of a color-coded visual output, such as a green field or a green dot, or a red field or a red dot, respectively, by outputting text result messages (200), such as "OK" or "FAIL", respectively, by outputting speech and/or by releasing or blocking at least one interlock, preferably at least one software interlock, when said data processing means (35) outputs a signal representing a "match" or "no match", respectively, as said comparison result.

11. System according to one of the preceding claims, **characterized in that** said at least one data processing means (35) comprises at least one external and/or integrated image recording device (42), where said image recording device (42) preferably comprises a video camera, and particularly preferably a high-resolution video camera.

12. System according to claim 11, **characterized in that** said at least one image recording device (42) is said second optical recording device (41).

13. System according to claim 11, **characterized in that** at least one image recorded by said external and/or integrated image recording device (42) is stored in said memory device (36) together with or in connection to said virtual representation, where said image is preferably prior to being stored subjected to image processing, in particular contrast enhancement, segmentation, edge detection, subtraction and the like.

14. System according to claim 11 or 13, **characterized in that** superimposition of said image and/or text output of said comparison result and/or of said stored image occurs with said image recorded by said image recording device and this superimposed image is outputted by means of said display device (37) of said at least one data processing means (35).

15. System according to one of the preceding claims, **characterized in that** said transformation information is continuously adapted on the basis of the position and orientation of said second optical recording device (41) relative to said measurement volume of said first optical recording device (40), in particular when said second optical recording device (41) is integrated into said mobile data processing means (35).

16. System according to one of the preceding claims, **characterized in that** said transformation information is generated and/or calibrated by at least once determining said position and said identifier of at least one identification mark (100) by said first optical recording device or said second optical recording device, respectively, and relating said position information to said information regarding the localization of said identifier within said plan projection.

17. System according to one of the preceding claims, **characterized in that** a projection of 3D-information occurs in said display area of said display device of said at least one data processing means and in particular a projection of 3D-information, such as spatial position information as well as information regarding said virtual representation according to the ray-tracing technology, in said display area of said display device of said at least one data processing means while considering the perspective of the viewer of said display device.

18. Use of a system according to one of the claims 1 to 17 for controlling the positioning of a plurality of identification marks relative to each other and/or absolute within said virtual representation, where said identification marks are arranged in particular on one or more objects and/or humans.

19. Use according to claim 18 for re-establishing the arrangement of identification marks after loss of said relative positioning to each other and/or said absolute positioning in relation to said virtual representation, in particular for re-positioning a human and/or objects relative to a human.

## Revendications

1. Système destiné à la saisie du marquage et de la position d'au moins un repère d'identification (100), présentant :
au moins un premier dispositif d'enregistrement optique (40), qui est configuré de sorte qu'au moyen de ce premier dispositif d'enregistrement optique, la position spatiale d'au moins un repère d'identification (100) qui est disposé à l'intérieur du volume de mesure du premier dispositif d'enregistrement optique (40), peut être saisie ;
au moins un équipement de traitement des données (35), qui est relié au moins indirectement avec le premier dispositif d'enregistrement optique (40), et qui reçoit transmises de celui-ci des informations sur la position spatiale du repère d'identification (100) ;
au moins un deuxième dispositif d'enregistrement optique (41), qui est configuré de sorte qu'au moyen de ce deuxième d'enregistrement optique, une projection plane d'au moins une partie du volume de mesure du premier dispositif d'enregistrement optique peut être balayée par définition locale ;
au moins un équipement de traitement des données (35), qui est relié au moins indirectement avec le deuxième dispositif d'enregistrement optique (41), et qui reçoit transmises de celui-ci des informations à définition locale sur la projection balayée, et
des informations de transformation se trouvant à la disposition d'au moins l'un des équipements de traitement des données (35), qui permettent la définition d'une région d'intérêt (ROI) dans les informations à définition locale sur la projection balayée, les ROI étant examinées pour vérifier la présence et le type d'informations de marquage, afin de détecter le marquage du repère d'identification (100),
**caractérisé en ce que**
dans un premier équipement de stockage (36) relié avec au moins l'un des équipements de traitement des données (35), une structure de données est prévue, qui comporte au moins partiellement une représentation virtuelle de l'espace tendu par le volume de mesure du premier dispositif d'enregistrement optique (40), la représentation virtuelle comportant des informations sur la position théorique (100_{SOLL}) d'au moins un repère d'identification ainsi qu'au moins un marquage affecté ; et
au moins l'un des équipements de traitement des données (35) effectue une comparaison entre la position réelle (100_{IST}) d'un repère d'identification et de la position théorique (100_{SOLL}) au sein de la représentation virtuelle ainsi qu'une comparaison du marquage détecté du repère d'identification saisi (100) et du marquage enregistré au sein de la structure de données du repère d'identification correspondant ;
et affiche comme résultat des comparaisons un signal représentant une « concordance » et/ou « aucune concordance ».

2. Système selon la revendication 1, **caractérisé en ce qu'**au moins un un premier dispositif d'enregistrement optique (40) est une caméra stéréoscopique fonctionnant dans la zone spectrale infrarouge et **en ce qu'**au moins le deuxième dispositif d'enregistrement optique est une caméra CCD ou CMOS fonctionnant dans la zone spectrale visible.

3. Système selon une quelconque des revendications 1 ou 2, **caractérisé en ce que** les informations de transformation sont configurées de sorte qu'en raison de l'application des informations de transformation aux informations sur la position locale d'un repère d'identification (100), une localisation du même repère d'identification s'effectue dans la projection plane, la définition de la ROI s'effectuant sur la base de la localisation dans les informations à résolution locale via la projection balayée.

4. Système selon une quelconque des revendications précédentes, **caractérisé en ce qu'**au moins l'un des équipements de traitement des données (35) est mobile, est notamment un équipement portatif de traitement des données et de préférence un ordinateur portable, une tablette, un smart-device ou un dispositif similaire.

5. Système selon une quelconque des revendications précédentes, **caractérisé en ce qu'**au moins l'un des équipements de traitement des données (35) se compose d'une majorité d'équipements de traitement des données en action conjointe, une communication des données s'effectuant entre les différents équipements de traitement des données de préférence au moyen de connexions de données optiques, radio ou électriques.

6. Système selon une quelconque des revendications précédentes, **caractérisé en ce que** la position réelle (100_{IST}) d'au moins un repère d'identification saisi (100), la position théorique (100_{SOLL}) d'au moins un repère d'identification correspondant et/ou la représentation virtuelle sont affichées graphiquement par un équipement d'affichage (37) relié au moins indirectement avec au moins un équipement de traitement des données (35).

7. Système selon une quelconque des revendications précédentes, **caractérisé en ce que** la représentation virtuelle comprend des informations sur la précision nécessaire de la concordance de position d'au moins un repère d'identification (100), et notamment en relation avec la position théorique (100_{SOLL}) d'au moins un repère d'identification avec marquage respectivement préconisé, l'information sur la précision requise de la concordance de position est indiquée entre la position théorique et la position réelle de ce repère d'identification (100).

8. Système selon la revendication 8, **caractérisé en ce que** l'équipement de traitement des données (35) affiche comme résultat de la comparaison de la position théorique avec la position réelle d'au moins un repère d'identification (100) un signal représentant une « concordance » et/ou « aucune concordance » pour le traitement ultérieur, lorsque la position réelle (100_{IST}) d'au moins un repère d'identification (100) concorde dans le cadre de la précision indiquée requise avec la position théorique (100_{SOLL}) de celui-ci dans le repère d'identification correspondant de la représentation virtuelle.

9. Système selon une quelconque des revendications précédentes, **caractérisé en ce que**, pour le cas où l'équipement de traitement des données (35) affiche comme résultat de la comparaison de la position théorique avec la position réelle d'au moins un repère d'identification (100) un signal représentant « aucune concordance » pour le traitement ultérieur, un vecteur de décalage est constitué au sein de la représentation virtuelle entre la position réelle et la position théorique d'au moins un repère d'identification (100) et affiché par l'équipement d'affichage (37) de l'équipement de traitement des données (35) et/ou sert de base pour l'amorçage d'au moins un élément de commande (39), afin de guider au moins un repère d'identification (100) dans sa position théorique.

10. Système selon une quelconque des revendications précédentes, **caractérisée en ce que** le résultat de comparaison est affiché au moins partiellement sous la forme d'une sortie visuelle codée en couleur, comme par exemple un champ vert et/ou un point vert ou un champ rouge et/ou un point rouge, par la sortie de notification de résultats par texte (200), comme par ex. « OK » et/ou « FAIL » par sortie vocale et/ou par libération ou blocage d'au moins une barrière de commutation, de préférence une barrière de commutation logicielle, lorsque l'équipement de traitement des données (35) affiche comme résultat de comparaison un signal représentant une "concordance" et/ou "aucune concordance".

11. Système selon une quelconque des revendications précédentes, **caractérisées en ce qu'**au moins l'équipement de traitement des données (35) présente au moins un dispositif d'enregistrement d'images (42) externe et/ou intégré, le dispositif d'enregistrement d'images (42) comportant de préférence une caméra vidéo et de préférence particulière une caméra vidéo à haute résolution.

12. Système selon la revendication 11, **caractérisé en ce que** le dispositif d'enregistrement d'images (42) est le deuxième dispositif d'enregistrement optique (41).

13. Système selon la revendication 11, **caractérisé en ce qu'**au moins une image enregistrée par un dispositif d'enregistrement d'images (42) externe et/ou intégré est stockée ensemble ou en association avec la représentation virtuelle dans l'équipement de stockage (36), l'image étant soumise de préférence avant son stockage à un traitement d'image, notamment une augmentation de contraste, une segmentation, une détection des arêtes, une soustraction et similaire.

14. Système selon les revendications 11 ou 13, **caractérisé en ce qu'**une superposition de la sortie d'image et/ou de texte du résultat de comparaison et/ou de l'image stockée s'effectue avec l'image enregistrée par le dispositif d'enregistrement d'images et **en ce que** cette image superposée est sortie par l'équipement d'affichage (37) d'au moins l'équipement de traitement des données (35).

15. Système selon une quelconque des revendications précédentes, **caractérisé en ce que** les informations de transformation sont adaptées constamment sur la base de la position et de l'orientation du deuxième dispositif d'enregistrement optique (41) par rapport au volume de mesure du premier dispositif d'enregistrement optique (40), notamment lorsque le deuxième dispositif d'enregistrement optique (41) est intégré dans l'équipement de traitement des données (35) mobile.

16. Système selon une quelconque des revendications précédentes, **caractérisé en ce que** les informations de transformation sont créées et/ou calibrées par au moins une détermination unique de la position et du marquage d'au moins un repère d'identification (100) par le premier dispositif d'enregistrement optique et/ou le deuxième dispositif d'enregistrement optique et la mise en rapport de l'information de position avec l'information sur la localisation du marquage au sein de la projection plane.

17. Système selon une quelconque des revendications précédentes, caractérisé en qu'une projection d'informations 3D s'effectue dans une surface d'affichage de l'équipement d'affichage d'au moins l'équipement de traitement des données, et notamment une projection d'informations 3D, par exemple des informations de position spatiale ainsi que des informations de la représentation virtuelle selon le procédé de tracé de rayons dans la surface d'affichage de l'équipement d'affichage d'au moins l'équipement de traitement des données en prenant en considération le point de vue de l'observateur de l'équipement d'affichage.

18. Utilisation d'un système selon une quelconque des revendications 1 à 17 destiné au contrôle du positionnement d'une majorité de repères d'identification les uns par rapport aux autres et/ou absolument au sein de la représentation virtuelle, les repères d'identification étant notamment affectés à un ou plusieurs objets et/ou personnes.

19. Utilisation selon la revendication 18, destinée à la restauration de repères d'identification après une perte du positionnement relatif les uns par rapport aux autres et/ou du positionnement absolu concernant la représentation virtuelle, notamment le repositionnement d'une personne et/ou d'objets concernant une personne.
